# EUROPÄISCHE PATENTSCHRIFT

(11) **EP 3 869 062 B1**
(45) Veröffentlichungstag und Bekanntmachung des Hinweises auf die Patenterteilung: **26.02.2025**
(21) Anmeldenummer: 21151651.3
(22) Anmeldetag: 14.01.2021
(51) Int. Cl.: F16F 7/08, F16F 7/09

(54) **REIBUNGSDÄMPFER**
FRICTION DAMPER
AMORTISSEUR À FRICTION

(30) Priorität: 24.02.2020 DE 102020202348
(43) Veröffentlichungstag der Anmeldung: 25.08.2021
(73) Patentinhaber: SUSPA GmbH, 90518 Altdorf (DE)
(72) Erfinder: Weder, Michael, 90455 Nürnberg (DE); Pelczer, Andreas, 90518 Altdorf (DE)
(74) Vertreter: Rau, Schneck & Hübner Patentanwälte Rechtsanwälte PartGmbB

(56) Entgegenhaltungen:
- WO-A1-2005/065484
- WO-A1-2020/008422
- DE-A1- 10 358 204
- US-A- 2 934 175
- US-A1- 2006 011 429
- US-A1- 2015 354 653
- US-B2- 9 022 185

## Beschreibung

Die vorliegende Patentanmeldung nimmt die Priorität der deutschen Patentanmeldung DE 10 2020 202 348.4 in Anspruch, deren Inhalt durch Bezugnahme hierin aufgenommen wird.

Die Erfindung betrifft einen Reibungsdämpfer.

Ein Reibdämpfer ist aus DE 103 58 204 A1 bekannt.

Ein richtungsabhängiger Reibungsdämpfer ist aus EP 3 296 587 A1 bekannt. In Abhängigkeit der Betätigungsrichtung eines Stößels wirkt entweder eine Auszugsreibung oder eine davon verschiedene Einschubreibung.

Es ist die Aufgabe der vorliegenden Erfindung, einen Reibungsdämpfer mit erweiterter Funktionalität bereitzustellen.

Diese Aufgabe ist erfindungsgemäß gelöst durch einen Reibungsdämpfer mit den im Anspruch 1 angegebenen Merkmalen.

Erfindungsgemäß wurde erkannt, dass eine erweiterte Funktionalität für einen Reibungsdämpfer ermöglicht ist, der eine Schalt-Einheit aufweist. Die Schalt-Einheit dient zur veränderlichen Festlegung einer Reibungskraft. Die Reibungskraft wird von einer Reibungs-Einheit richtungsabhängig erzeugt. Die Reibungskraft wirkt auf einen Stößel, der entlang einer Längsachse eines Gehäuses des Reibungsdämpfers verlagerbar ist. Die von der Reibungs-Einheit erzeugte Reibungskraft ist richtungsabhängig, insbesondere abhängig von der Verlagerungsrichtung des Stößels, also entlang einer Auszugsrichtung des Stößels aus dem Gehäuse oder entlang einer Einschubrichtung des Stößels in das Gehäuse. Richtungsabhängig bedeutet, dass sich die Reibungskraft in Einschubrichtung betragsmäßig von der Reibungskraft in Auszugsrichtung unterscheidet. Insbesondere ist die in Auszugsrichtung wirkende Reibungskraft, die auch als Auszugsreibung bezeichnet wird, größer als die in Einschubrichtung wirkende Reibungskraft, die auch als Einschubreibung bezeichnet wird. Zum Erzeugen der Reibungskraft weist die Reibungs-Einheit mindestens einen Reibbelag auf, der an dem Stößel reibend anliegt.

Mittels der Schalt-Einheit kann die Reibungskraft veränderlich festgelegt werden. Insbesondere kann der Betrag der Reibungskraft, insbesondere stufenweise, veränderlich festgelegt werden. Insbesondere kann der Betrag der Reibungskraft richtungsabhängig und/oder richtungsunabhängig festgelegt werden. Insbesondere wird der Betrag der Reibungskraft in Auszugsrichtung festgelegt und ist insbesondere in Einschubrichtung veränderlich festlegbar, insbesondere entlang der Einschubrichtung zunehmend. Das bedeutet, dass bei einer Betätigung des Stößels in Einschubrichtung die Reibungskraft umso größer ist, je weiter der Stößel in das Gehäuse eingeschoben ist. Der Betrag der Reibungskraft ist insbesondere amplitudenabhängig. Der Betrag der Reibungskraft ist insbesondere richtungsabhängig. Zum veränderlichen Festlegen der Reibungskraft wirkt die Schalt-Einheit mit der Reibungs-Einheit zusammen. Wenn die Reibungskraft mittels der Schalt-Einheit für eine Extremposition eines Reibbelagsträgers der Reibungs-Einheit festgelegt ist, ist die Reibungskraft insbesondere nicht richtungsabhängig, sondern richtungsunabhängig. Das bedeutet, dass die Reibungskraft in den Extrempositionen des Reibbelagsträgers richtungsunabhängig ist, wenn sie von der Schalt-Einheit festgelegt ist. In diesem Fall ist die Reibungskraft betragsmäßig in Einschubrichtung und in Auszugsrichtung identisch. Die Extrempositionen sind insbesondere eine Minimalposition und eine Maximalposition des Reibbelagsträgers. In der Minimalposition des Reibbelagsträgers wird insbesondere eine minimale Einschubkraft in Einschubrichtung auf den Stößel ausgeübt. In der Maximalposition wird insbesondere eine maximale Reibungskraft in Einschubrichtung auf den Stößel ausgeübt. Zwischen den Extrempositionen kann der Reibbelagsträger auch mindestens eine Zwischenposition einnehmen. Der Reibbelagsträger kann auch mehrere verschiedene Zwischenpositionen einnehmen, insbesondere mindestens zwei Zwischenpositionen, insbesondere mindestens drei Zwischenpositionen, insbesondere mindestens vier Zwischenpositionen, insbesondere mindestens fünf Zwischenpositionen, insbesondere mindestens zehn Zwischenpositionen, insbesondere mindestens 15 Zwischenpositionen und insbesondere höchstens 20 Zwischenpositionen. Es ist insbesondere möglich, den Reibbelagsträger in der mindestens einen Zwischenposition mittels der Schalt-Einheit derart festzulegen, dass eine Betätigung des Stößels in Einschub-Richtung eine Verlagerung des Reibbelagsträgers erfolgt und somit sich die Reibungskraft in Einschub-Richtung verändert, wohingegen eine Betätigung des Stößels in Auszugsrichtung keine Verlagerung des Reibbelagsträgers bewirkt, so dass eine konstante Reibungskraft in Auszugsrichtung wirkt.

Eine Ausführung der Reibungs-Einheit mit einem Reibbelagsträger, an dem der mindestens eine Reibbelag gehalten ist, wobei der Reibbelagsträger relativ zum Stößel zwischen einer Auszugsposition und einer Einschubposition verlagerbar angeordnet ist, ermöglicht eine unmittelbare und unkomplizierte Erzeugung der richtungsabhängigen Reibungskraft. Die Reibungs-Einheit weist insbesondere mehrere, insbesondere genau zwei, insbesondere mehr als zwei, insbesondere mindestens drei, insbesondere mindestens vier und insbesondere höchstens zwanzig Reibbeläge auf. Die Reibungs-Einheit wirkt passiv. Mittels des Reibbelagsträgers, der insbesondere im Gehäuse angeordnet ist, kann die Auszugsreibung bzw. die Einschubreibung erzeugt werden, indem er zwischen einer Auszugsposition und einer Einschubposition verlagert wird. Durch die Veränderung des Reibbelagsträgers zwischen der Auszugsposition und der Einschubposition wird auch die Anordnung des mindestens einen Reibbelags relativ zum Stößel verändert. Dadurch verändert sich, insbesondere der Betrag, der Reibungskraft in Abhängigkeit der Verlagerungsrichtung des Stößels.

Die Schalt-Einheit dient insbesondere zum schaltbaren Verriegeln des Reibbelagsträgers, insbesondere in der Auszugsposition und/oder in der Einschubposition. Durch das Verriegeln ist die Verlagerbarkeit des Reibbelagsträgers blockiert. In den Extrempositionen des Reibbelagsträgers ist die Anordnung des mindestens einen Reibbelags relativ zum Stößel unabhängig von der Verlagerungsrichtung des Stößels festgelegt. In der blockierten Anordnung des Reibbelagsträgers sind Auszugsreibung und Einschubreibung betragsmäßig identisch.

Insbesondere wirkt die Reibungs-Einheit mit dem Stößel derart zusammen, dass der Reibbelagsträger bei einer Verlagerung des Stößels in Auszugsrichtung in die Auszugsposition und bei einer Verlagerung des Stößels in Einschubrichtung in die Einschubposition verlagert wird. Die Verlagerung der Reibungs-Einheit ergibt sich unmittelbar aus der Verlagerung des Stößels, insbesondere durch die Reibungskraft zwischen dem mindestens einen Reibbelag und dem Stößel. Die Verlagerung der Reibungs-Einheit ist integriert in den typischen Betätigungsablauf des Reibungsdämpfers.

Ein Kippen des Reibbelagsträgers, der um eine Kippachse kippbar im Gehäuse angeordnet ist, vereinfacht den Wechsel zwischen der Auszugsposition und der Einschubposition. Die Kippachse ist insbesondere gehäusefest angeordnet. Die Kippachse ist quer zur Längsachse des Gehäuses orientiert. Insbesondere ist die Kippachse im Wesentlichen senkrecht zur Längsachse orientiert, wobei Winkelabweichungen von +/- 15° bezüglich einer senkrechten Orientierung zur Längsachse für die Kippachse denkbar sind. Insbesondere beträgt die Winkelorientierung zwischen der Kippachse und der Längsachse zwischen 75° und 105°, insbesondere zwischen 80° und 100°, insbesondere zwischen 85° und 95°, insbesondere zwischen 87° und 93°, insbesondere zwischen 88° und 92°, insbesondere zwischen 89° und 91° und insbesondere exakt 90°. Insbesondere ist im Gehäuse ein Kippzapfen angeordnet, an dem der Reibbelagsträger mit einer Kippöffnung kippbar angelenkt ist. Der Kippzapfen gibt die Kippachse vor. Die Kippbarkeit des Reibbelagsträgers ist vereinfacht. Der Reibbelagsträger wird auch als Kippkolben bezeichnet.

Insbesondere ist die Kippachse beabstandet von der Längsachse, insbesondere windschief zur Längsachse angeordnet. Aufgrund der beabstandeten Anordnung der Kippachse zur Längsachse ist ein Kippen des Reibbelagsträgers, also ein Umschalten zwischen der Auszugsposition und der Einschubposition vorteilhaft möglich. Insbesondere wird unmittelbar ein Drehmoment bezüglich der Kippachse auf den Reibbelagsträger in Abhängigkeit der Betätigung des Stößels in Einschubrichtung bzw. in Auszugsrichtung bewirkt.

Eine Ausführung des Reibbelagsträgers gemäß Anspruch 2 gewährleistet eine unkomplizierte und zuverlässige Anordnung des mindestens einen Reibbelags in einer dafür vorgesehenen Reibbelagsaufnahme. Insbesondere ist für jeden Reibbelag mindestens eine und insbesondere genau eine Reibbelagsaufnahme vorgesehen. Insbesondere sind mehrere, insbesondere zwei, Reibbelagsaufnahmen in dem Reibbelagsträger integriert, wobei in jeder Reibbelagsaufnahme ein Reibbelag angeordnet ist.

Eine Ausführung des Reibungsdämpfers gemäß Anspruch 3 ermöglicht eine verbesserte, insbesondere effizientere, Reibkrafterzeugung. Es ist denkbar, die Reibbeläge identisch auszuführen. Der Herstellungsaufwand für den Reibungsdämpfer ist reduziert. Die Reibbeläge weisen insbesondere eine Kontur auf, die der Außenkontur des Stößels entspricht. Die Reibbeläge können flächig, insbesondere vollflächig, an dem Stößel anliegen. Die Reibkrafterzeugung ist effizient. Die Reibbeläge weisen insbesondere eine Halbschalenkontur auf. Die Halbschalenkontur ist ein offener Rohrquerschnitt. Die Innenkontur der Halbschale ist insbesondere eine Innenzylindermantelfläche. Es ist auch denkbar, dass der Stößel eine senkrecht zur Längsachse orientierte Querschnittsfläche aufweist, die unrund ausgeführt ist, insbesondere oval oder polygonartig. Entsprechend ist die Innenkontur des Reibbelags in diesem Fall ausgeführt. Es ist auch denkbar, dass der Reibbelag durch einen oder mehrere Reibstreifen ausgeführt ist. Ein Reibstreifen ist im Wesentlichen flächig ausgeführt. Der Reibstreifen ist insbesondere flexibel, so dass der Reibstreifen insbesondere durch Einlegen in die Reibbelagsaufnahme die dem Stößel korrespondierende Kontur annimmt. Insbesondere weist die Reibbelagsaufnahme eine dem Stößel korrespondierende Kontur auf.

Eine Ausführung des Reibbelagsträgers gemäß Anspruch 4 ermöglicht eine effektive Reibungsdämpfung. Der mindestens eine Reibbelag kann in radialer Richtung bezogen auf die Längsachse zwischen dem innen angeordneten Stößel und dem außen angeordneten Reibbelagsträger angeordnet sein. Insbesondere wird der mindestens eine Reibbelag von dem Reibbelagsträger in radialer Richtung an den Stößel gedrückt. Der Reibbelagsträger mit Durchgangsöffnung ermöglicht eine kompakte Bauweise der Reibungs-Einheit.

Eine Ausführung der Durchgangsöffnung gemäß Anspruch 5 ermöglicht ein vorteilhaftes Umschalten zwischen der Auszugsposition und der Einschubposition. Insbesondere ist ein kollisionsfreies Kippen des Reibbelagsträgers gegenüber dem Stößel zwischen der Auszugsposition und der Einschubposition möglich. Eine Durchgangsöffnung des Reibbelagsträgers stellt den für das Umschalten zwischen der Auszugsposition und der Einschubposition erforderlichen Freiraum zur Verfügung. Eine unsymmetrische Kontur der Durchgangsöffnung ist beispielsweise dadurch gegeben, dass die Kontur eine Trennlinie aufweist. Die Durchgangsöffnung weist insbesondere eine unsymmetrische Innen-Kontur auf. Die unsymmetrische Innen-Kontur kann abschnittsweise symmetrisch ausgeführt sein und beispielsweise als Kreissegment ausgeführt sein. Symmetrisch bedeutet rotationssymmetrisch zur Längsachse. Die unsymmetrische Innen-Kontur weist jedenfalls mindestens einen unsymmetrischen Abschnitt auf, der insbesondere unrund ausgeführt ist. Es können auch mehrere, insbesondere getrennt voneinander ausgeführte unsymmetrische Abschnitte vorgesehen sein. Wesentlich ist, dass die unsymmetrische Innen-Kontur zumindest abschnittsweise nicht rotationssymmetrisch bezüglich der Längsachse ausgeführt ist. Unsymmetrisch bedeutet insbesondere nicht rotationssymmetrisch bezüglich der senkrecht zur Kontur orientierten Längsachse. Die Trennlinie ist insbesondere eine Gerade, die insbesondere die Längsachse schneidet. Die Trennlinie symbolisiert eine Trennebene, die sich entlang der Längsachse erstreckt. Die Trennlinie kann auch gekrümmt oder geknickt ausgeführt sein. Die Trennlinie unterteilt die Kontur der Durchgangsöffnung in einen symmetrischen, insbesondere runden Konturabschnitt und einen unsymmetrischen, insbesondere unrunden Konturabschnitt. Durch die Trennlinie sind der symmetrische Konturabschnitt und der unsymmetrische Konturabschnitt voneinander getrennt.

Eine Ausführung der Durchgangsöffnung gemäß Anspruch 6 gewährleistet, dass der Reibbelagsträger in Abhängigkeit der Kippposition entweder mit einem ersten oder mit einem zweiten Durchgangsöffnungsabschnitt parallel zur Längsachse des Gehäuses angeordnet ist. Die Durchgangsöffnungsabschnitte weisen jeweils eine Abschnitts-Längsachse auf, die zueinander geneigt angeordnet sind. Die Abschnitts-Längsachsen sind insbesondere derart orientiert, dass in der Auszugsposition des Reibbelagsträgers eine erste Abschnitts-Längsachse parallel zur Längsachse des Gehäuses und eine zweite Abschnitts-Längsachse geneigt zu der Längsachse des Gehäuses angeordnet ist. Entsprechend ist in der Einschubposition die zweite Abschnitts-Längsachse parallel zur Längsachse des Gehäuses und die erste Abschnitts-Längsachse geneigt zur Längsachse des Gehäuses angeordnet.

Eine Reibbelagsaufnahme gemäß Anspruch 7 ermöglicht eine zuverlässige und sichere Aufnahme des Reibbelags am Reibbelagsträger. Der Reibbelag ist in der Reibbelagsaufnahme insbesondere in radialer Richtung und/oder in axialer Richtung bezogen auf die Längsachse des Gehäuses und/oder die Abschnitts-Längsachse gehalten. Die Reibbelagsaufnahme weist insbesondere eine Tiefe auf, die geringfügig kleiner ist als die Dicke des Reibbelags, so dass der Reibbelag dauerhaft in radialer Richtung an den Stößel angepresst wird. Die Reibbelagsaufnahme weist eine entlang der Längsachse orientierte Länge auf, die etwa der Länge des Reibbelags entspricht. Der Reibbelag ist dann zuverlässig und axial nicht vorgespannt in der Reibbelagsaufnahme gehalten. Es ist auch denkbar, den Reibbelag in axialer Richtung vorzuspannen, indem die Reibbelagsaufnahme eine Länge aufweist, die kleiner ist als die Länge des Reibbelags.

Bei einer Ausführung der Durchgangsöffnung mit einem senkrecht zur Längsachse orientierten Querschnitt, der entlang der Längsachse veränderlich ist, ist gewährleistet, dass in Abhängigkeit der Kippposition des Reibbelagsträgers ein zuverlässiges Anliegen des Reibbelags zumindest abschnittsweise am Stößel gewährleistet ist.

Befestigungselemente an dem Reibungsdämpfer gemäß Anspruch 8 ermöglichen eine unmittelbare Befestigung des Reibungsdämpfers an zueinander beweglichen Teilen, insbesondere eines Waschbottichs und einem Gehäuse einer Waschmaschine.

Eine Ausführung der Schalt-Einheit gemäß Anspruch 9 ermöglicht eine robuste und unmittelbare Verriegelung des Reibbelagsträgers. Insbesondere dient ein Verriegelungselement zum unmittelbaren Zusammenwirken mit dem Reibbelagsträger.

Die Schalt-Einheit weist einen schaltbaren Aktuator auf, der insbesondere ein Linearaktuator ist und der insbesondere als Hubmagnet, Spindelmotor, Pneumatikzylinder oder Hydraulikzylinder ausgeführt sein kann. Wesentlich ist, dass der Aktuator zweifach wirkend und insbesondere selbsthaltend ausgeführt sein kann. Das bedeutet, dass der Aktuator in beiden Linearrichtungen aktiv geschaltet, also entlang dieser Richtungen angetrieben verlagert werden kann und insbesondere die jeweilige Position halten kann. Alternativ kann der Aktuator als einfach wirkender Aktuator, also nur in einer der beiden Linearrichtungen aktiv geschaltet, ausgeführt sein.

Eine Ausführung des Verriegelungselements gemäß Anspruch 10 gewährleistet eine effiziente Festlegung der Reibungskraft. Das Verriegelungselement liegt insbesondere unmittelbar an dem Reibbelagsträger an. Das Verriegelungselement kann insbesondere in eine beabstandete Anordnung bezüglich des Reibbelagsträgers verlagert werden. In dieser beabstandeten Anordnung ist die Verlagerbarkeit des Reibbelagsträgers unbehindert. Wenn das Verriegelungselement kontaktlos von dem Reibbelagsträger angeordnet ist, ist der Reibbelagsträger unverriegelt. In dieser Anordnung des Verriegelungselements erzeugt die Reibungs-Einheit die richtungsabhängige Reibungskraft. Zum verriegelten Anordnen weist das Verriegelungselement eine Anlagefläche auf, mit der das Verriegelungselement an einer Verriegelungsfläche des Reibbelagsträgers anliegt.

Eine Ausführung des Verriegelungselements gemäß Anspruch 11 ist unkompliziert und stabil. Insbesondere ist die Betätigung des Verriegelungselements und/oder das Zusammenwirken des Verriegelungselements mit dem Reibbelagsträger unkompliziert und mechanisch robust.

Eine Ausnehmung des Verriegelungselements gemäß Anspruch 12 vereinfacht das Verriegeln des Reibbelagsträgers. Der Reibbelagträger kann in und/oder an der Ausnehmung des Verriegelungselements angeordnet sein. Das Verriegelungselement kann entlang der Längsachse kollisionsfrei bezüglich des Reibbelagträgers verlagert werden. Ein derartiger Reibungsdämpfer ermöglicht eine kompakte und robuste, insbesondere platzsparende Konstruktion. Die Ausnehmung ist insbesondere als Öffnung, insbesondere als Durchgangsöffnung ausgeführt. Die Ausnehmung und insbesondere die Durchgangsöffnung weisen eine Grundfläche auf, die insbesondere parallel zur Längsachse und parallel zur Kippachse orientiert ist. Die Ausnehmung, insbesondere die Durchgangsöffnung, erstreckt sich an dem Verriegelungselement, insbesondere ausgehend von einer dem Reibbelagsträger zugewandten Unterseite, entlang einer zu der Grundfläche senkrecht orientierten Erstreckungsrichtung. Die Erstreckungsrichtung ist insbesondere senkrecht zur Längsachse und senkrecht zur Kippachse orientiert. Es ist auch denkbar, dass sich die Ausnehmung nicht vollständig durchgängig durch das Verriegelungselement erstreckt. Die Ausnehmung kann sich auch von einer Seitenfläche des Verriegelungselements aus, insbesondere entlang der Kippachse, erstrecken. Es ist insbesondere denkbar, dass an dem Verriegelungselement beidseitig Ausnehmungen vorgesehen sind, so dass der Reibbelagsträger das Verriegelungselement laschenartig umgreift und an dem Verriegelungselement vorbeigeführt ist.

Eine Ausfallsicherungs-Einheit gemäß Anspruch 13 gewährleistet einen zuverlässigen und insbesondere beschädigungsfreien und/oder zerstörungsfreien Betrieb des Reibungsdämpfers im Fall einer unbeabsichtigten Störung. Eine derartige Störung liegt insbesondere dann vor, wenn der schaltbare Aktuator unbeabsichtigt deaktiviert wird. Eine unbeabsichtigte Deaktivierung ist beispielsweise für einen als Hubmagnet ausgeführten Aktuator dann gegeben, wenn unbeabsichtigt die Bestromung entfällt beispielsweise bei Stromausfall. Ein Schalten des Aktuators ist dann nicht mehr möglich. Die Ausfallsicherungs-Einheit gewährleistet, dass in diesem Fall das Verriegelungselement in eine Position verlagert wird, in der der Reibungsdämpfer eine maximale Reibungswirkung aufweist. Diese Position wird als Maximalposition bezeichnet.

Die Ausfallsicherungs-Einheit weist insbesondere mindestens ein Kraftspeicherelement, insbesondere zwei oder mehr Kraftspeicherelemente, auf, das insbesondere als eine mechanische Feder, insbesondere als eine Schrauben-Druck-Feder ausgeführt ist. Der Aktuator ist ein einfach wirkender Hubmagnet. Durch Bestromung wird der Hubmagnet geschaltet und in eine Position verlagert, sodass das Verriegelungselement den Reibbelagsträger in einer Minimalposition mit minimaler richtungsunabhängiger Reibungskraft verriegelt. Der einfach wirkende Aktuator kann auch derart angesteuert werden, dass eine oder mehrere Zwischenpositionen des Reibbelagsträgers verriegelt wird, in der eine größere als die minimale Reibkraft vorliegt. Eine oder mehrere Zwischenpositionen können beispielsweise dadurch realisiert werden, dass der Aktuator mit einer der Federkraft proportionalen Spannung angesteuert wird, so dass der Reibbelagsträger in der mindestens einen Zwischenposition gehalten ist. Durch das Anlegen der der Federkraft proportionalen Spannung ergibt sich eine Ansteuerung des Magneten, der den Reibbelagsträger in der Zwischenposition hält. Zum gezielten veränderlichen Festlegen der Reibungskraft wird der Aktuator betätigt. Wenn der Aktuator deaktiviert, also die Stromzufuhr beendet, wird, wird der Reibbelagsträger infolge der Federkraft in die Maximalposition verlagert. In diesem Fall wirkt die maximale Reibungskraft. Wenn der Aktuator mit einer erhöhten Spannung betätigt wird, wird der Reibbelagsträger entgegen der Federkraft in eine andere Zwischenposition oder in die Minimalposition verlagert, die von der Spannung, mit der der Aktuator angesteuert wird, abhängt. In dieser Zwischenposition oder Minimalposition wirkt eine Reibungskraft, die gegenüber der maximalen Reibungskraft reduziert und insbesondere minimal ist. Dadurch ist eine gezielte Festlegung einer reduzierten, insbesondere minimalen, Reibungskraft möglich.

Die Verlagerung des Verriegelungselements in die Minimalposition erfolgt entgegen der Federkraft des mindestens einen Kraftspeicherelements. Dadurch ist eine Gegenkraft in dem Kraftspeicherelement eingeprägt, die der Verlagerung und Anordnung des Verriegelungselements in der Minimalposition entgegenwirkt.

Aufgrund der eingeprägten Gegenkraft des Kraftspeicherelements wird das Verriegelungselement aus der Minimalposition oder einer Zwischenposition heraus, insbesondere in die Maximalposition verlagert. Insbesondere ist die von dem Kraftspeicherelement ausgeübte Gegenkraft derart dimensioniert, dass sie das Verriegelungselement und den Aktuator zuverlässig in die Maximalposition zurückverlagern. Insbesondere gewährleistet das mindestens eine Kraftspeicherelement eine zuverlässige Verlagerung des Verriegelungselements mit dem Aktuator in die Maximalposition bei unbeabsichtigtem Stromausfall. Die Ausfallsicherungs-Einheit gewährleistet einen sogenannten Fail-Safe-Betrieb des Reibungsdämpfers. Es ist ausgeschlossen, dass der Reibungsdämpfer bei Stromausfall unbeabsichtigt mit reduzierter und insbesondere mit minimaler Reibungskraft betätigt wird. Beschädigungen und/oder Zerstörungen an den zu dämpfenden Komponenten sind ausgeschlossen.

Der Aktuator kann eine anteilige oder vollständige Selbsthaltung aufweisen. Aufgrund der anteiligen oder vollständigen Selbsthaltung ist der Energieverbrauch reduziert, da die Bestromung des Aktuators reduziert oder deaktiviert werden kann, wenn sich der Aktuator mit dem Verriegelungselement in der Minimalposition oder einer Zwischenposition befindet. Bei teilweiser Selbsthaltung bewirkt das mindestens eine Kraftspeicherelement die Zurückverlagerung in die Maximalposition, wenn die Bestromung beabsichtigt oder unbeabsichtigt wegfällt. Im Fall der vollständigen Selbsthaltung dient eine zusätzlicher elektrischer Energiespeicher zum Bereitstellen elektrischer Energie für das Auslösen des Schaltvorganges in die Maximalposition. Der elektrische Energiespeicher kann durch einen oder mehrere Kondensatoren ausgeführt sein. Der elektrische Energiespeicher stellt einen Stromimpuls für einen Schaltvorgang zur Verfügung, der zum Lösen der Selbsthaltung des Aktuators dient. Sobald der Aktuator die Selbsthalteposition, also die Minimalposition, verlässt, verringert sich auch dessen Selbsthaltekraft deutlich. Die weitere Verlagerung des Aktuators zurück in die Maximalposition erfolgt aufgrund der in dem Kraftspeicherelement, also der mechanischen Feder, eingeprägten Gegenkraft. Um bei der vollständigen Selbsthaltung die "Fail-Safe-Funktion" zu gewährleisten, ist eine Steuerungsvorrichtung vorgesehen, die bei Stromausfall den erforderlichen Stromimpuls für den Schaltvorgang zur Verfügung stellen kann.

Die Steuerungsvorrichtung weist insbesondere mindestens eine oder mehrere elektrische Komponenten, insbesondere elektro-mechanische Komponenten, insbesondere elektro-mechanische Schalter, insbesondere Relais, und/oder elektronische Komponenten, insbesondere elektronische Schaltkomponenten, insbesondere Transistoren, auf. Wenn Netzspannung anliegt, wird der zusätzliche elektrische Energiespeicher elektrisch geladen. Die Verbindung des elektrischen Energiespeichers zu dem Aktuator ist mittels der elektrischen Komponente getrennt. Bei einem, insbesondere unbeabsichtigten, Stromausfall gewährleisten die elektrischen Komponenten, dass der elektrische Energiespeicher von der Ladeeinrichtung, insbesondere der Netzspannung, getrennt und mit dem Aktuator verbunden wird. Dazu sind die elektrischen Schaltkomponenten insbesondere derart eingerichtet, dass sie im spannungsfreien Zustand den elektrischen Energiespeicher mit dem Aktuator verbinden.

Zusätzlich oder alternativ ist es auch möglich, die in dem elektrischen Energiespeicher gespeicherte elektrische Energie zusätzlich für die Steuerung der Steuerungsvorrichtung, insbesondere mittels Transistoren, zu verwenden.

Sowohl die in den Patentansprüchen angegebenen Merkmale als auch die in den nachfolgenden Ausführungsbeispielen des erfindungsgemäßen Reibungsdämpfers angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung von zwei Ausführungsbeispielen anhand der Zeichnung. Es zeigen:
- Fig. 1: eine Seitenansicht eines erfindungsgemäßen Reibungsdämpfers,
- Fig. 2: eine teilgeschnittene Darstellung gemäß Schnittlinie II-II in Fig. 1 mit entriegeltem Reibbelagsträger bei einer Betätigung in Auszugsrichtung,
- Fig. 3: eine Fig. 2 entsprechende Darstellung mit entriegeltem Reibbelagsträger bei einer Betätigung des Stößels in Einschubrichtung,
- Fig. 4: eine Fig. 2 entsprechende Darstellung mit verriegeltem Reibbelagsträger in einer Minimalposition bei einer minimalen richtungsunabhängigen Reibungskraft,
- Fig. 5 bis 7: Fig. 2 entsprechende Darstellungen mit dem Reibbelagsträger in verschiedenen Zwischenpositionen mit jeweils unterschiedlich verriegelter Kraft in Auszugrichtung, wobei der Reibbelagsträger in Einschubrichtung unverriegelt ist,
- Fig. 8: eine Fig. 2 entsprechende Darstellung mit verriegeltem Reibbelagsträger in einer Maximalposition bei einer maximalen richtungsunabhängigen Reibungskraft,
- Fig. 9: eine perspektivische Explosionsdarstellung von Reibungs-Einheit und Schalt-Einheit,
- Fig. 10: eine vergrößerte perspektivische Darstellung des Reibbelagsträgers,
- Fig. 11: eine Schnittdarstellung gemäß Schnittlinie XI-XI in Fig. 10,
- Fig. 12: eine vergrößerte perspektivische Darstellung des Verriegelungselements,
- Fig. 13: eine Schnittdarstellung gemäß Schnittlinie XIII-XIII in Fig. 12,
- Fig. 14: eine Fig. 9 entsprechende Darstellung von Reibungs-Einheit und Schalt-Einheit eines Reibungsdämpfers gemäß einem zweiten Ausführungsbeispiel,
- Fig. 15: eine Fig. 4 entsprechende Darstellung des Reibungsdämpfers gemäß Fig. 14,
- Fig. 16: einen Längsschnitt gemäß Schnittlinie XVI-XVI in Fig. 15,
- Fig. 17: eine Fig. 16 entsprechende Darstellung in einer Maximalposition des Reibbelagsträgers,
- Fig. 18: eine Schnittdarstellung gemäß Schnittlinie XVIII-XVIII in Fig. 17.

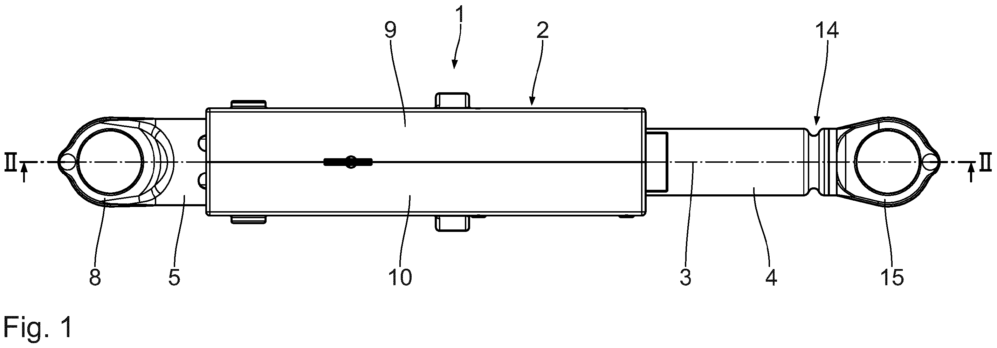

Ein in Fig. 1 bis 13 als Ganzes mit 1 bezeichneter Reibungsdämpfer weist ein Gehäuse 2 mit einer Längsachse 3 und einen entlang der Längsachse 3 verlagerbaren Stößel 4 auf.

Das Gehäuse 2 ist mehrteilig ausgeführt und umfasst einen Rohrgehäuseabschnitt 5 und einen damit verbundenen Dämpfungsgehäuseabschnitt 6. Der Rohrgehäuseabschnitt 5 und der Dämpfungsgehäuseabschnitt 6 sind entlang der Längsachse 3 hintereinander angeordnet. Der Rohrgehäuseabschnitt 5 und der damit verbundene Dämpfungsgehäuseabschnitt 6 bilden gemeinsam das Gehäuse 2.

Der Rohrgehäuseabschnitt 5 weist zumindest abschnittsweise einen Rohrabschnitt auf, dessen Innenkontur der Außenkontur des Stößels 4 entspricht. Der Rohrabschnitt des Rohrgehäuseabschnitts 5 dient zur Axialführung des Stößels 4. Gemäß dem gezeigten Ausführungsbeispiel ist der Rohrabschnitt als Zylinderrohr ausgeführt. Entsprechend der Außenkontur des Stößels 4 kann die Innenkontur des Rohrabschnitts auch unrund, insbesondere oval oder polygonförmig, insbesondere viereckig, sechseckig oder achteckig, ausgeführt sein. Der Rohrgehäuseabschnitt 5 ist konzentrisch zur Längsachse 3 orientiert. Der Rohrgehäuseabschnitt 5 weist einen Ringbund 7 auf, der bezüglich der Längsachse 3 radial nach außen vorstehend ausgerichtet ist. Der Ringbund 7 ist insbesondere einteilig mit dem Rohrabschnitt verbunden, insbesondere einteilig daran angeformt. Der Ringbund 7 ist insbesondere stirnseitig an dem Rohrgehäuseabschnitt 5 ausgeführt. Der Rohrgehäuseabschnitt 5 ist abschnittsweise innerhalb des Dämpfungsgehäuseabschnitts 6 angeordnet, also abschnittsweise von dem Dämpfungsgehäuseabschnitt 6 umschlossen. An einem freiliegenden, dem Ringbund 7 gegenüberliegenden Ende weist der Rohrgehäuseabschnitt 5 ein erstes Befestigungselement 8 in Form eines Befestigungsauges auf.

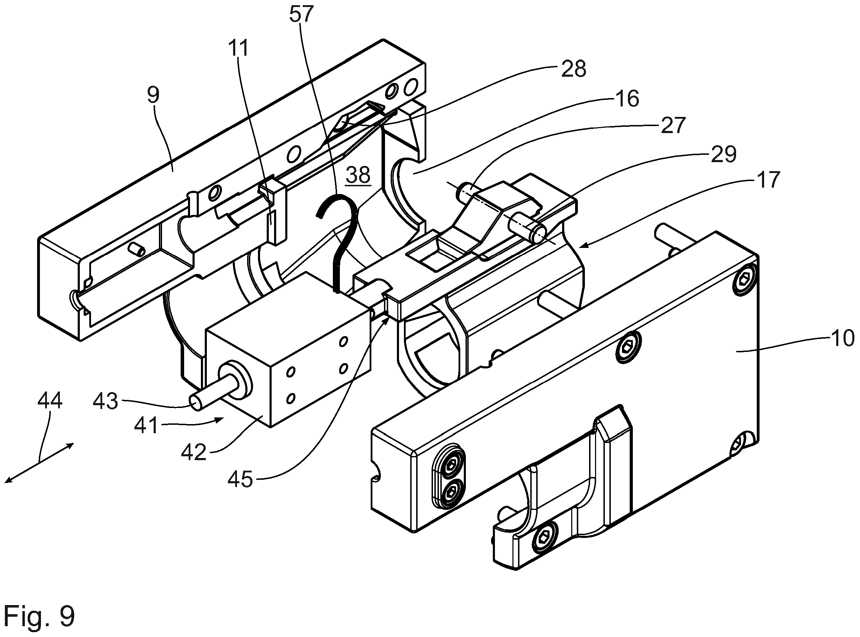

Der Dämpfungsgehäuseabschnitt 6 ist mehrteilig ausgeführt und umfasst zwei Gehäusehalbschalen 9, 10, die insbesondere in Fig. 9 dargestellt sind. Die Gehäusehalbschalen 9, 10 sind bezüglich einer Trennebene lösbar miteinander verbindbar. Die Trennebene ist senkrecht zu der Zeichenebene gemäß Fig. 1 orientiert und enthält die Längsachse 3. Die Gehäusehalbschalen 9, 10 weisen jeweils eine dem Rohrgehäuseabschnitt 5, insbesondere dem Rohrabschnitt und dem Ringbund 7, korrespondierende Ausnehmungen 11 auf, in die der Rohrgehäuseabschnitt 5 eingesetzt ist. Der Rohrgehäuseabschnitt 5 ist mit dem Dämpfungsgehäuseabschnitt 6 formschlüssig verbunden. Der Rohrgehäuseabschnitt 5 ist an dem Dämpfungsgehäuseabschnitt 6 bezüglich der Längsachse 3 axial und radial festgelegt.

Der Stößel 4 ist rohrförmig ausgeführt. Der Stößel 4 ist ein Gleitrohr. Der Stößel 4 ist gemäß dem gezeigten Ausführungsbeispiel als Zylinderrohr ausgeführt. Es ist denkbar, dass der Stößel 4 ein Rohr mit einer abweichenden Außenkontur, insbesondere einer unrunden Außenkontur wie beispielsweise einer ovalen oder polygonförmigen, insbesondere viereckigen, sechseckigen oder achteckigen, Außenkontur ausgeführt ist. Wesentlich ist, dass die Außenkontur des Stößels 4 entlang der Längsachse 3 konstant ist. Mit seinem ersten Ende 12, das eine Einführschräge 13 aufweist, ist der Stößel 4 in dem Gehäuse 2, insbesondere in dem Rohrgehäuseabschnitt 5, angeordnet.

An einem dem ersten Ende 12 gegenüberliegenden zweiten Ende 14 weist der Stößel 4 ein zweites Befestigungselement 15 auf, das als Befestigungsauge ausgeführt ist. Das zweite Befestigungselement 15 ist insbesondere mit einem Verbindungsabschnitt stirnseitig in das Gleitrohr des Stößels 4 eingesteckt und darin befestigt. Gemäß dem gezeigten Ausführungsbeispiel ist das Gleitrohr des Stößels 4 auf den Befestigungsabschnitt des zweiten Befestigungselements 15 durch Formpressen verbunden. Es sind auch andere Fügeverfahren wie Kleben, Schweißen möglich.

Das zweite Ende 14 des Stößels 4 mit dem zweiten Befestigungselement 15 ist außerhalb des Gehäuses 2 angeordnet.

Der Reibungsdämpfer 1 kann mit den Befestigungselementen 8, 15 an zueinander beweglichen, zu dämpfenden Teilen angelenkt sein. Beispielsweise sind die Befestigungselemente 8, 15 zur Dämpfung von Oszillationen einer Waschmaschine mit dem Gehäuse der Waschmaschine einerseits und mit dem Waschbottich der Waschmaschine andererseits verbunden.

Das Gehäuse 2 weist eine Gehäuseöffnung 16 auf, durch die hindurch der Stößel 4 in das Gehäuse 2, insbesondere durch den Dämpfungsgehäuseabschnitt 6 hindurch in den Rohrgehäuseabschnitt 5, geführt ist.

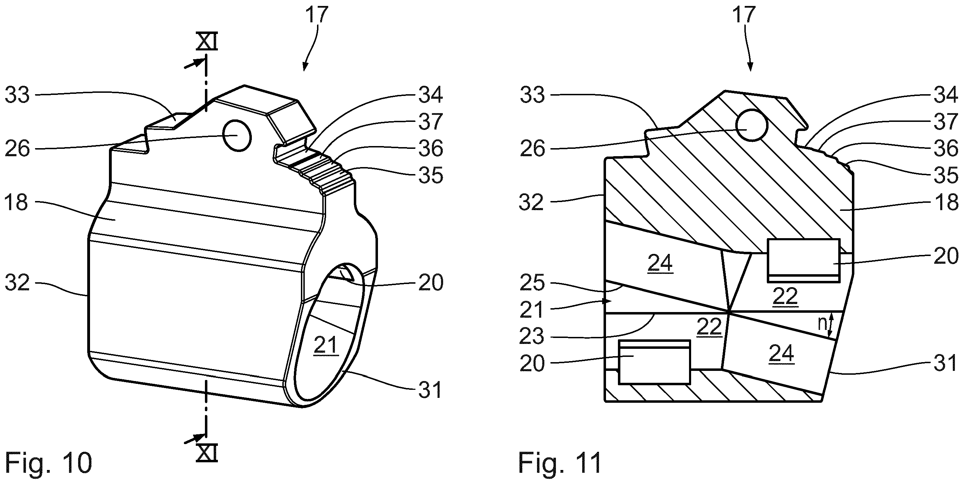

Der Reibungsdämpfer 1 weist eine Reibungs-Einheit 17 auf, die in Fig. 10 und 11 im Detail dargestellt ist. Die Reibungs-Einheit 17 umfasst einen Reibbelagsträger 18, an dem zwei identische, jeweils halbschalenförmig ausgeführte Reibbeläge 19 gehalten sind. Die Reibbeläge 19 sind jeweils in einer Reibbelagsaufnahme 20 angeordnet, die als Vertiefung in einer Innenfläche einer Durchgangsöffnung 21 des Reibbelagsträgers 18 ausgeführt ist.

Der Reibbelagsträger 18 ist kolbenartig ausgeführt.

Im montierten Zustand des Reibungsdämpfers 1 ist der Stößel 4 durch die Durchgangsöffnung 21 hindurch geführt.

Die Durchgangsöffnung 21 ist in einer Ebene senkrecht zur Längsachse zumindest abschnittsweise unsymmetrisch ausgeführt. Die Durchgangsöffnung 21 weist einen ersten Durchgangsöffnungsabschnitt 22 mit einer ersten Abschnitts-Längsachse 23 und einen zweiten Durchgangsöffnungsabschnitt 24 mit einer zweiten Abschnitts-Längsachse 25 auf.

Insbesondere sind die Reibbelagsausnehmungen 20 jeweils als nutförmige Vertiefungen im Bereich der ersten Durchgangsöffnungsabschnitte 22 angeordnet. Die ersten Durchgangsöffnungsabschnitte 22 erstrecken sich in Umfangsrichtung bezüglich der Längsachse 3 entlang von 180°. Jeweils ein erster Durchgangsöffnungsabschnitt 22 und ein zweiter Durchgangsöffnungsabschnitt 24 bilden zusammen die geschlossene Durchgangsöffnung 21. Da die erste Abschnitts-Längsachse 23 gegenüber der zweiten Abschnitts-Längsachse 25 mit einem Neigungswinkel n geneigt angeordnet ist, ist die Kontur der Innenfläche der Durchgangsöffnung 21, die durch die Teilkonturen des ersten Durchgangsöffnungsabschnitts 22 und des zweiten Durchgangsöffnungsabschnitts 24 gebildet wird, unrund. Gemäß dem gezeigten Ausführungsbeispiel beträgt der Neigungswinkel etwa 15°. Insbesondere gilt: 0° < n < 45°, insbesondere 5° < n < 30°, insbesondere 10° < n < 20°.

Entlang der Längsachse 3 sind jeweils ein erster Durchgangsöffnungsabschnitt 21 und ein zweiter Durchgangsöffnungsabschnitt 24 hintereinander angeordnet.

Der Reibbelagsträger 18 weist eine Schwenköffnung 26 auf, durch die zur schwenkbaren Anordnung des Reibbelagsträgers 18 in dem Gehäuse 2 ein Verbindungselement 27 in Form eines Kippzapfens geführt ist. Das Verbindungselement 27 ist jeweils stirnseitig in einer korrespondierenden Aufnahme 28 an einer Innenseite der Gehäusehalbschalen 9, 10 gehalten. Das Verbindungselement 27 gibt eine Kippachse 29 vor, um die der Reibbelagsträger 18 an dem Verbindungselement 27 und damit gegenüber dem Gehäuse 2 kippbar ist. Die Kippachse 29 ist senkrecht zur Längsachse 3 des Gehäuses 2 orientiert. Die Kippachse 29 ist beabstandet zu der Längsachse 3 orientiert. Die Kippachse 29 und die Längsachse 3 schneiden sich nicht. Die Lagebeziehung der Kippachse 29 und der Längsachse 3 im Raum wird als windschief bezeichnet. Die Kippachse 29 ist insbesondere senkrecht zu der Trennebene der Gehäusehalbschalen 9, 10 orientiert. Die Schwenköffnung 26 ist beabstandet zu der Durchgangsöffnung 21 an dem Reibbelagsträger 18 angeordnet.

Der Reibbelagsträger 18 umfasst eine erste Anschlagfläche 31 und eine zweite Anschlagfläche 32. Die erste Anschlagfläche 31 und die zweite Anschlagfläche 32 sind entlang der Längsachse 3 bezogen auf die Schwenköffnung 26 gegenüberliegend zueinander angeordnet. Die erste Anschlagfläche 31 und die zweite Anschlagfläche 32 sind jeweils an einer Außenseite des Reibbelagsträgers 18 angeordnet.

Der Reibbelagsträger 18 weist eine erste Verriegelungsfläche 33 und eine zweite Verriegelungsfläche 34 auf. Ferner weist der Reibbelagsträgers 18 eine dritte Verriegelungsfläche 35, eine vierte Verriegelungsfläche 36 und eine fünfte Verriegelungsfläche 37 auf. Die Verriegelungsflächen 34, 35, 36 und 37 sind stufenartig und benachbart zueinander an einer Außenseite des Reibbelagsträgers 18 ausgeführt. Die Verriegelungsflächen 34, 35, 36 und 37 schließen jeweils unmittelbar aneinander an.

Zur kippbaren Anordnung des Reibbelagsträger 18 im Gehäuse 2 weisen die Gehäusehalbschalen 9, 10 jeweils eine Reibbelagsträger-Ausnehmung 38 auf, die im Wesentlichen der Außenkontur des Reibbelagsträger 18 entspricht, jedoch eine Kippbarkeit des Reibbelagsträger 18 in dem Gehäuse 2 um die Kippachse 29 ermöglicht. Die Reibbelagsträgerausnehmung 38 weist zu den Anschlagflächen 31 und 32 korrespondierende Gegenflächen 39 und 40 auf.

Der Reibungsdämpfer 1 weist ferner eine Schalt-Einheit 41 auf. Die Schalt-Einheit 41 umfasst einen schaltbaren Aktuator 42, der als Linearaktor ausgeführt ist. Zur Betätigung des elektrisch schaltbaren Aktuators 42 weist dieser ein Anschlusskabel 57 auf. Der Aktuator 42 weist ein Stellelement 43 auf, das entlang einer Stellrichtung 44 verlagerbar ist. Die Stellrichtung 44 ist parallel zur Längsachse 3 orientiert. Der Aktuator 42 kann beispielsweise als Hubmagnet, Spindelmotor, Pneumatikzylinder oder Hydraulikzylinder ausgeführt sein. Der Aktuator 42 ist zweifach wirkend ausgeführt, also entlang der Einschubrichtung 58 und entlang der Auszugsrichtung 58 aktiv verlagerbar. Der Aktuator 42 ist selbsthaltend ausgeführt. Der Aktuator 42 in der jeweils angesteuerten Position zuverlässig gehalten.

Die Schalt-Einheit 41 weist ein Verriegelungselement 45 auf, das mit dem Aktuator 42, insbesondere mit dem Stellelement 43, mechanisch gekoppelt ist. Der Aktuator 42 dient zur Linearverlagerung des Verriegelungselements 45 entlang der Stellrichtung 44.

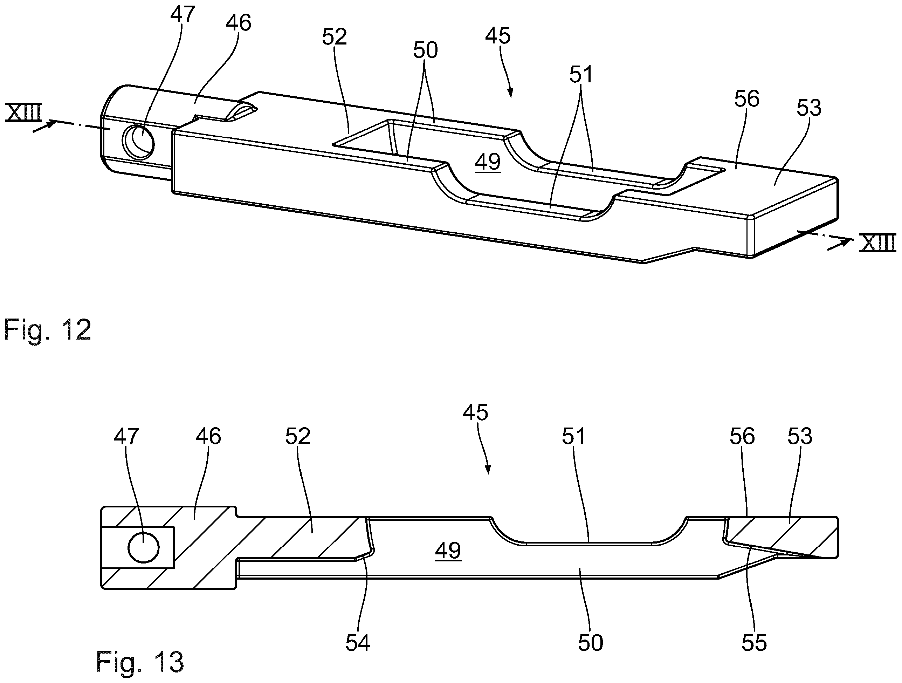

Das Verriegelungselement 45, das in Fig. 12 und 13 im Detail dargestellt ist, weist einen zapfenförmigen Verbindungsabschnitt 46 auf, der zur Verbindung mit dem Stellelement 43 dient. Dazu ist in dem Verbindungsabschnitt 46 eine Querbohrung 47 vorgesehen, durch die ein Verbindungsbolzen 48 zur Verbindung mit dem Stellelement 43 geführt ist.

Das Verriegelungselement 45 ist als Schieber ausgeführt. Das Verriegelungselement 45 ist im Wesentlichen leistenartig ausgeführt, wobei sich die Leiste entlang der Stellrichtung 44 erstreckt. Das Verriegelungselement weist eine als Öffnung ausgeführte Ausnehmung 49 auf, durch die hindurch der Reibbelagsträger 18 in der montierten Anordnung des Reibungsdämpfers 1 geführt ist. Aufgrund der Öffnung 49 ist das Verriegelungselement 45 rahmenartig ausgeführt.

Das Verriegelungselement 45 weist an die Öffnung 49 begrenzenden Seitenstegen 50, die parallel zur Stellrichtung 44 orientiert sind, jeweils eine nutförmige Vertiefung 51 auf, in der das Verbindungselement 27 angeordnet ist.

Das Verriegelungselement 45 weist einen hinteren, dem Verbindungsabschnitt 46 zugewandten Quersteg 52 und einen vorderen, dem Verbindungsabschnitt 46 abgewandten Quersteg 53 auf. Die Querstege 52, 53 begrenzen die Öffnung 49 in Richtung der Stellrichtung 44. Die Querstege 52, 53 verbinden jeweils die gegenüberliegend angeordneten Seitenstege 50.

An dem hinteren Quersteg 52 ist an dessen Unterseite und benachbart zu der Öffnung 49 eine erste Anlagefläche 54 ausgebildet.

Der vordere Quersteg 53 weist eine im Wesentlichen keilförmige Kontur auf, die sich zum hinteren Quersteg 52 hin verjüngt. Der vordere Quersteg 53 weist eine zweite Anlagefläche 55. Die zweite Anlagefläche 55 bildet die gegenüber der Oberseite 56 des vorderen Querstegs 53 geneigte Unterseite.

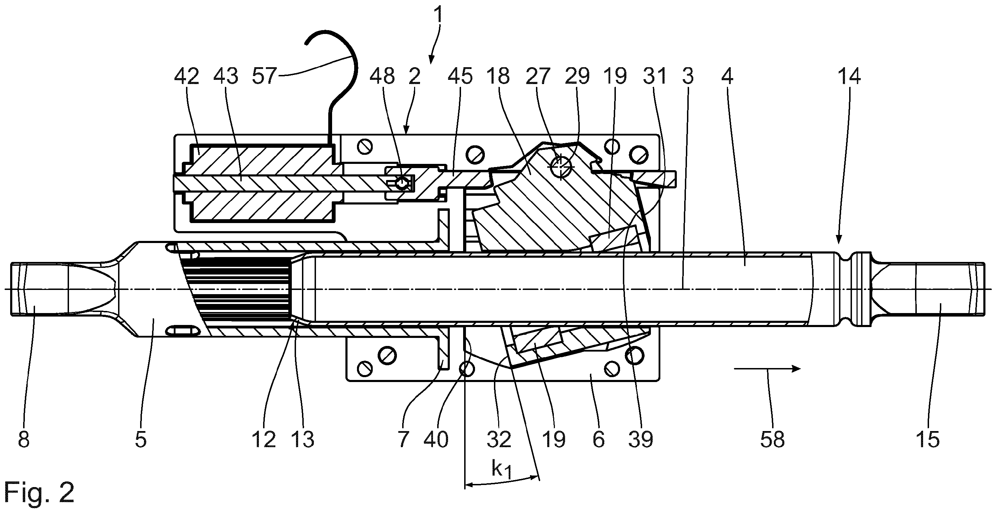

Nachfolgend wird anhand von insbesondere Fig. 2 bis 8 die Funktion des Reibungsdämpfers 1 näher erläutert. Gemäß Fig. 2 ist bei dem Reibungsdämpfer 1 die Schalt-Einheit 41 derart geschaltet, dass die Verlagerbarkeit des Reibbelagsträgers 18 unblockiert ist. Der Reibbelagsträger 18 kann um die Kippachse 29 in Abhängigkeit der Verlagerungsrichtung des Stößels 4 kippen. Insbesondere ist das Verriegelungselement 45 derart angeordnet, dass der Reibbelagsträger 18 bezüglich des Verriegelungselements 45 kontaktlos in dem Gehäuse 2 gekippt werden kann. In der genannten Schaltstellung der Schalt-Einheit 41 ist der Reibbelagsträger 18 entriegelt.

Bei einer Verlagerung des Stößels 4, wie in Fig. 2 dargestellt, entlang einer Auszugsrichtung 58 reibt die Außenkontur des Stößels 4 an den Reibbelägen 19. In Folge der Reibkraftübertragung von dem Stößel 4 auf die Reibbeläge 19 und den Reibbelagsträger 18 wirkt ein Drehmoment auf den Reibbelagsträger 18, das gemäß Fig. 2 im Gegenuhrzeigersinn zur Kippachse 29 orientiert ist. Ausgehend von der Anordnung in Fig. 2 ist ein weiteres Kippen des Reibbelagsträgers 18 verhindert, da der Reibbelagsträger 18 mit der ersten Anschlagfläche 31 an der korrespondierenden ersten Gegenfläche 39 des Gehäuses 2 anliegt.

In der in Fig. 2 gezeigten Anordnung befindet sich der Reibbelagsträger 18 in einer Auszugsposition. In der Auszugsposition ist der Reibbelagsträger 18 mit einem ersten Kippwinkel k₁ um die Kippachse 29 gekippt. Dadurch, dass die Kontaktfläche und die Flächenpressung der Reibbeläge 19 mit dem Stößel 4 minimal ist, ist auch die in Auszugsrichtung 58 verursachte Reibungswirkung, die sogenannte Auszugsreibung, minimal.

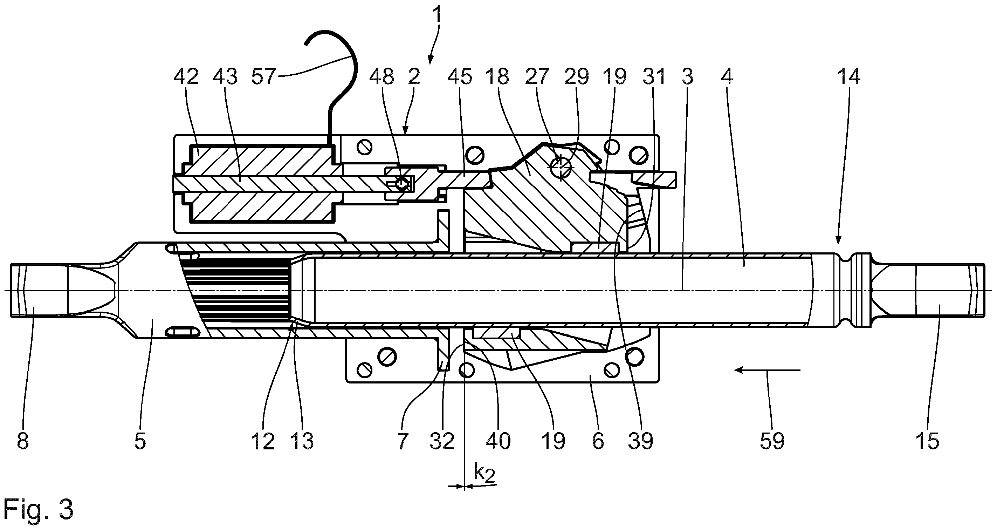

Bei einer Betätigung des Reibungsdämpfers 1 in Einschubrichtung 59, wie in Fig. 3 dargestellt, und bei entriegeltem Reibbelagsträger 18 wird der Reibbelagsträger 18 um die Kippachse 29 im Uhrzeigersinn gemäß Fig. 3 so weit geschwenkt, bis der Reibbelagsträger 18 mit der zweiten Anschlagsfläche 32 an der korrespondierenden zweiten Gegenfläche 40 des Gehäuses 2 anliegt. In dieser Anordnung, die auch als Einschubposition bezeichnet wird, ist die Reibungswirkung entgegen der Einschubrichtung 59 maximal, da die Reibbeläge 19 mit maximaler Kontaktfläche und maximaler Flächenpressung an der Außenseite des Stößels 4 anliegen. Die Einschubreibung ist größer als die Auszugsreibung.

In der in Fig. 3 gezeigten Einschubposition ist der Reibbelagsträger 18 gegenüber der Kippachse 29 mit einem zweiten Kippwinkel k₂ gekippt. Gemäß dem gezeigten Ausführungsbeispiel beträgt der zweite Kippwinkel k₂ 0°.

Insbesondere ergibt sich die Differenz aus erstem Kippwinkel k₁ und zweitem Kippwinkel k₂ aus dem Neigungswinkel n, der durch die Abschnitts-längsachsen 23, 25 festgelegt ist.

Die in Fig. 2 und 3 gezeigte Funktionalität des Reibungsdämpfers 1 mit entriegeltem Reibbelagsträger 18 entspricht im Wesentlichen der des Reibungsdämpfers gemäß der EP 3 296 587 A1, worauf hiermit ausdrücklich verwiesen wird. Zusätzlich weist der Reibungsdämpfer 1 eine weitere Funktion auf.

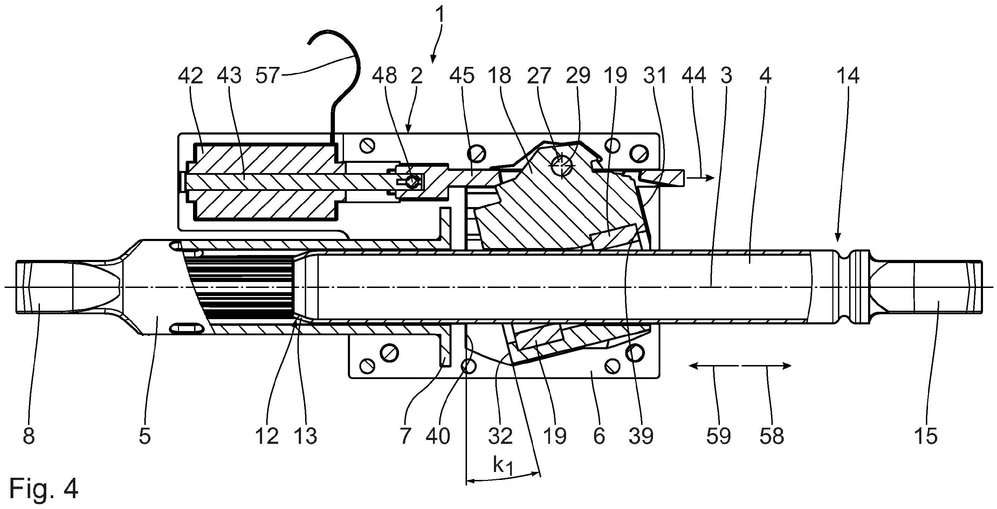

Nachfolgend wird die Funktion der Schalt-Einheit 41 und das Zusammenwirken mit der Reib-Einheit 17, insbesondere dem Reibbelagsträger 18, anhand der Fig. 4 bis 8 näher erläutert.

Ausgehend von Fig. 2, bei der eine minimale Reibungskraft auf den Stößel 4 von der Reibungs-Einheit 17 ausgeübt wird, wird das Verriegelungselement 45 in eine erste Verriegelungsposition verlagert, die in Fig. 4 dargestellt ist. Dazu wird das Verriegelungselement 45 ausgehend von der Anordnung in Fig. 2 entlang der Stellrichtung 44 nach rechts, also von dem Aktuator 42 weg, verlagert. Die Verlagerung erfolgt so weit, bis das Verriegelungselement 45 mit der ersten Anlagefläche 54 an der ersten Verriegelungsfläche 33 des Reibbelagsträgers 18 anliegt. In dieser Schaltstellung weist der Reibungsdämpfer 1 eine minimale Reibungskraft, nämlich die Einschubreibung, und minimale Flächenpressung auf, selbst dann, wenn der Stößel 4 in Einschubrichtung 59 verlagert wird. Der Reibbelagsträger befindet sich in der Minimalposition. Ein Kippen des Reibbelagsträgers 18 um die Kippachse 29 im Uhrzeigersinn ist durch das Verriegelungselement 45 blockiert. Bei einer Verlagerung des Stößels 4 in Auszugsrichtung 58 ist ein Kippen des Reibbelagsträgers 18 um die Kippachse 29 im Gegenuhrzeigersinn dadurch blockiert, dass der Reibbelagsträger 18 mit der ersten Anschlagfläche 31 an der korrespondierenden Gegenfläche 39 anliegt.

Entsprechend ist es möglich, ausgehend von der Anordnung des Reibbelagsträgers 18 in der Einschubposition, also bei maximaler Reibungskraft, den Reibbelagsträger 18 zu blockieren, indem das Verriegelungselement 45 nach links, also zu dem Aktuator 42, entlang der Stellrichtung 44 hin verlagert wird. In dieser Anordnung liegt der Reibbelagsträger 18 mit der zweiten Verriegelungsfläche 34 an der zweiten Anlagefläche 55 an.

Um den Reibbelagsträger 18 in der Einschubposition, also bei maximaler Reibungskraft, zu blockieren, ist eine Hubbewegung des Verriegelungselements 45 entlang der Stellrichtung 44 erforderlich. Es wurde erkannt, dass es vorteilhaft ist, wenn zusätzliche Zwischen-Schaltstellungen festlegbar sind, die unterschiedliche Reibungsverhältnisse gewährleisten. In den verschiedenen Zwischen-Schaltstellungen weist der Reibungsdämpfer jeweils eine betragsmäßig unterschiedliche Reibungskraft auf. Insbesondere ist in den Zwischen-Schaltstellungen jeweils eine Schwenkbewegung des Reibbelagsträgers 18 bei einer Betätigung des Stößels 4 in Auszugsrichtung 58 durch das Verriegelungselement 45 blockiert. In Auszugsrichtung 58 ist die Reibungskraft betragsmäßig festgelegt. Bei einer Betätigung des Stößels 4 in Einschubrichtung 59 ist eine Schwenkbewegung des Reibbelagsträgers 18 möglich, insbesondere derart, dass die Reibungskraft bei einer Betätigung des Stößels 4 in Einschubrichtung 59 erhöht wird.

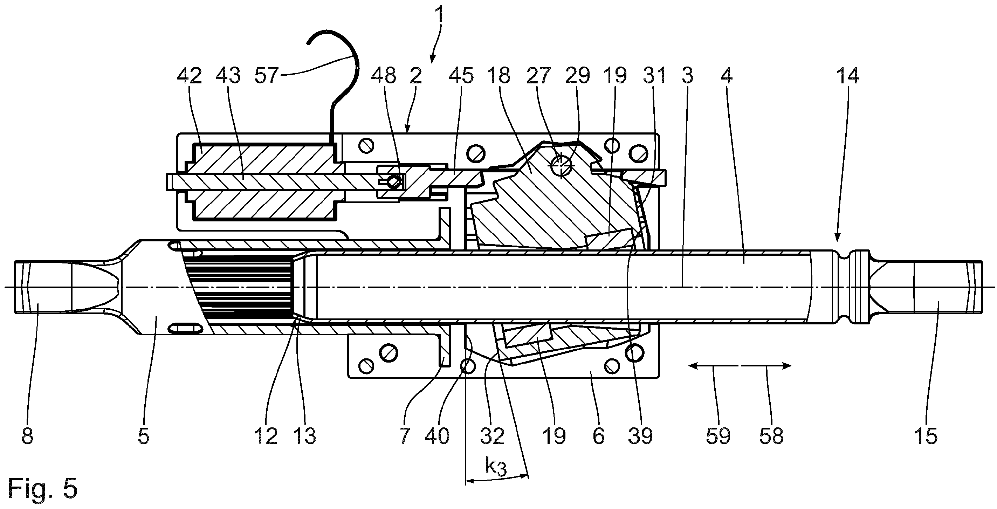

Gemäß der in Fig. 5 gezeigten Schaltstellung einer ersten Raststufe ist das Verriegelungselement 45 mit der zweiten Anlagefläche 55 an der dritten Verriegelungsfläche 35 angeordnet. In dieser Anordnung beträgt der dritte Kippwinkel k₃ 10,5°. Gemäß Fig. 5 befindet sich der Reibbelagsträger 18 in einer ersten Zwischenposition, die eine erste Zwischen-Schaltstellung darstellt. In der ersten Zwischenposition ist eine Schwenkbewegung des Reibbelagsträgers 18 um die Kippachse 29 im Gegenuhrzeigersinn, also bei einer Betätigung des Stößels 4 in Auszugsrichtung 58, durch das Verriegelungselement 45 blockiert. Bei einer Betätigung des Stößels 4 in Einschubrichtung bewirkt die von den Reibbelägen 19 verursachte Reibungskraft ein Drehmoment auf den Reibbelagsträger 19 um die Kippachse 29 im Uhrzeigersinn. Ein Kippen des Reibbelagsträgers 18 um die Kippachse 29 im Uhrzeigersinn ist möglich.

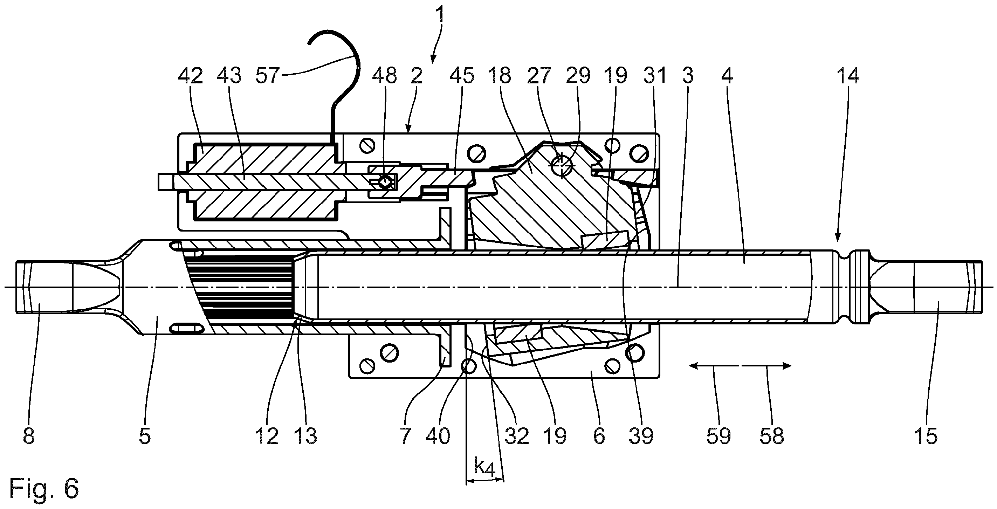

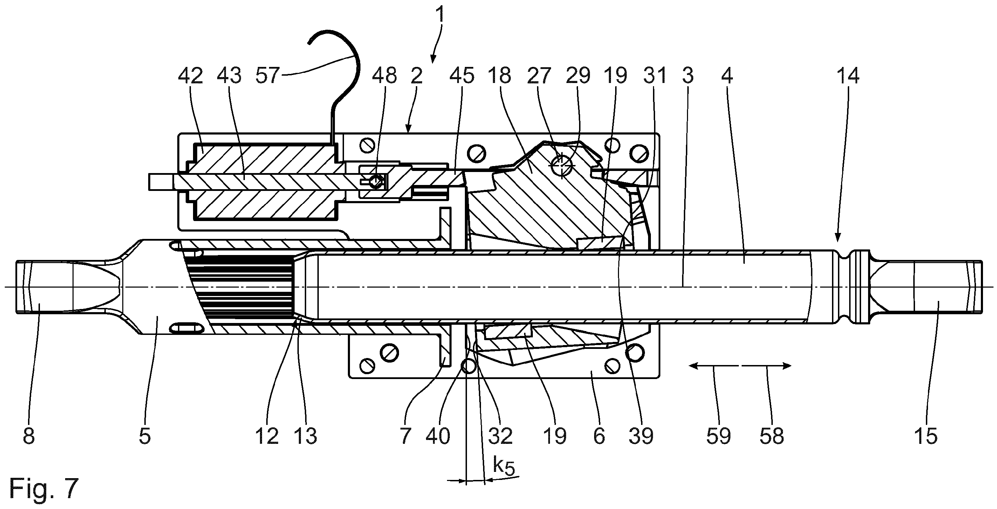

Entsprechend ist in der Schaltstellung gemäß Fig. 6 in der zweiten Raststufe das Verriegelungselement 45 mit der zweiten Anlagefläche 55 an der vierten Verriegelungsfläche 36 angeordnet. In dieser Anordnung beträgt der vierte Kippwinkel k₄ 7°. Gemäß Fig. 6 befindet sich der Reibbelagsträger 18 in einer zweiten Zwischenposition, die eine zweite Zwischen-Schaltstellung darstellt. In der zweiten Zwischenposition ist eine Schwenkbewegung des Reibbelagsträgers 18 um die Kippachse 29 im Gegenuhrzeigersinn, also bei einer Betätigung des Stößels 4 in Auszugsrichtung 58, durch das Verriegelungselement 45 blockiert. Bei einer Betätigung des Stößels 4 in Einschubrichtung 59 bewirkt die von den Reibbelägen 19 verursachte Reibungskraft ein Drehmoment auf den Reibbelagsträger 19 um die Kippachse 29 im Uhrzeigersinn. Ein Kippen des Reibbelagsträgers 18 um die Kippachse 29 im Uhrzeigersinn ist möglich. In der Schaltstellung gemäß Fig. 7 in einer dritten Raststufe ist das Verriegelungselement 45 mit der zweiten Anlagefläche 55 an der fünften Verriegelungsfläche 37 des Reibbelagsträgers 18 angeordnet. In dieser Anordnung beträgt der fünfte Kippwinkel k₅ 3,5°. Gemäß Fig. 7 befindet sich der Reibbelagsträger 18 in einer dritten Zwischenposition, die eine dritte Zwischen-Schaltstellung darstellt. In der dritten Zwischenposition ist eine Schwenkbewegung des Reibbelagsträgers 18 um die Kippachse 29 im Gegenuhrzeigersinn, also bei einer Betätigung des Stößels 4 in Auszugsrichtung 58, durch das Verriegelungselement 45 blockiert. Bei einer Betätigung des Stößels 4 in Einschubrichtung 59 bewirkt die von den Reibbelägen 19 verursachte Reibungskraft ein Drehmoment auf den Reibbelagsträger 18 um die Kippachse 29 im Uhrzeigersinn. Ein Kippen des Reibbelagsträgers 18 um die Kippachse 29 im Uhrzeigersinn ist möglich.

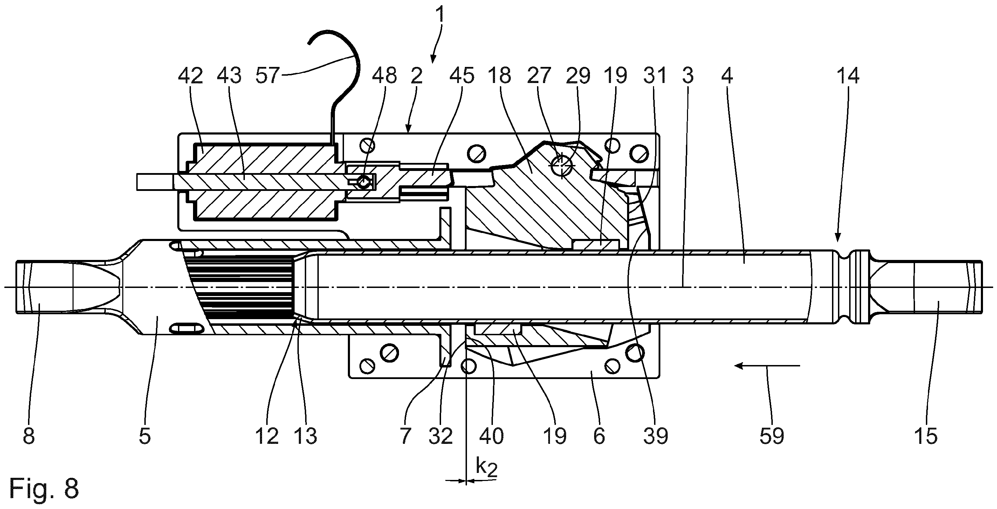

In der Anordnung gemäß Fig. 8 weist der Reibungsdämpfer 1 eine maximale, richtungsunabhängige Reibungskraft auf. Der Reibbelagsträger 18 liegt mit der zweiten Anschlagfläche 32 an der Gegenfläche 40 an. Eine Betätigung des Stößels 4 in Einschubrichtung 59 bewirkt kein Kippen des Reibbelagsträgers 18 um die Kippachse 29 im Uhrzeigersinn. Ein Kippen des Reibbelagsträgers 18 um die Kippachse 29 im Gegenuhrzeigersinn bei einer Betätigung des Stößels in Auszugsrichtung ist durch das Verriegelungselement 45 blockiert.

Gemäß dem gezeigten Ausführungsbeispiel sind also zwischen der Schaltstellung in Auszugsposition mit minimaler Reibungskraft in Einschubrichtung 59 gemäß Fig. 4 und in Einschubposition mit maximaler Reibungskraft in Einschubrichtung 59 gemäß Fig. 8 drei Zwischenstufen vorgesehen, bei welchen die Kippwinkel k₃, k₄ und k₅ jeweils gleich beabstandet zueinander und insbesondere zu dem ersten Kippwinkel k₁ und dem zweiten Kippwinkel k₂ angeordnet sind.

Es ist möglich, mehr oder weniger, insbesondere gar keine, Zwischenstufen vorzusehen. Es ist insbesondere denkbar, dass die Abstände zwischen den einzelnen Zwischenstufen und/oder zu den Schaltstufen maximaler und minimaler Reibungskraft unterschiedlich festgelegt werden.

Es wurde gefunden, dass die Schaltstellungen mit den Zwischenstufen gemäß erster bis dritter Raststufe es vereinfachen, den Reibungsdämpfer 1 auch bei kleineren Amplituden des Stößels 4 den Schaltvorgang des Verriegelungselements 45 in die Stellung der maximalen Reibungskraft durchzuführen.

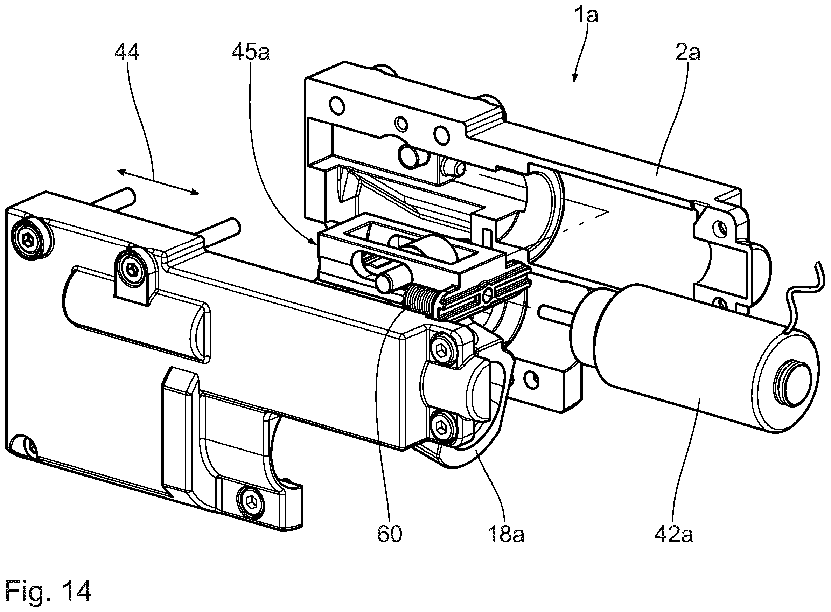

Im Folgenden wird unter Bezugnahme auf Fig. 14 bis 18 ein zweites Ausführungsbeispiel der Erfindung beschreiben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

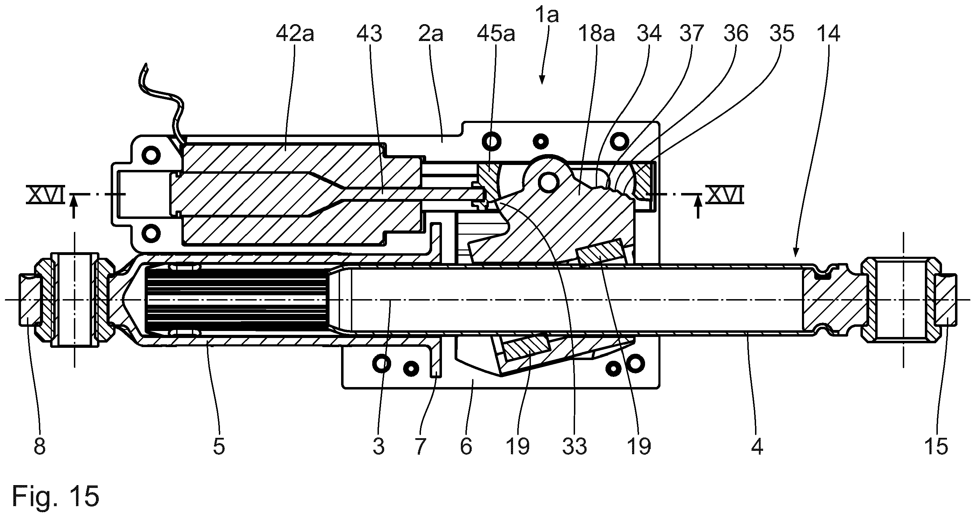

Ein wesentlicher Unterschied des Reibungsdämpfers 1a gegenüber dem vorherigen Ausführungsbeispiel besteht darin, dass der Aktuator 42a einfach wirkend ausgeführt ist. Der Aktuator 42a ist entlang der Stellrichtung 44 in einer Richtung betätigbar, die von dem Aktuator 42a zu dem Verriegelungselement 45a hin gerichtet ist. Diese Richtung ist gemäß Fig. 15 bis 18 von links nach rechts orientiert. In der entgegengesetzten Gegenrichtung kann der Aktuator 42a nicht geschaltet werden.

Der Reibungsdämpfer 1a weist zudem eine Ausfallsicherungs-Einheit auf, die gemäß dem gezeigten Ausführungsbeispiel zwei Kraftspeicherelemente 60 aufweist. Jedes Kraftspeicherelement 60 ist gemäß dem gezeigten Ausführungsbeispiel als Schrauben-Druck-Feder ausgeführt. Es können auch mehr oder weniger als zwei Kraftspeicherelemente 60 vorgesehen sein. Die Kraftspeicherelemente 60 sind in dem Gehäuse 2a seitlich jeweils neben dem Verriegelungselement 45 angeordnet und in dem Gehäuse 2a jeweils an einer gehäusefesten Anlageschulter 61 axial entlang der Stellrichtung 44 abgestützt. Die Anlageschulter 61 ist derart im Gehäuse 2a orientiert, dass eine Verlagerung der Kraftspeicherelemente 60 in der Betätigungsrichtung des Aktuators 42a, also von dem Aktuator 42a zu dem Verriegelungselement 45a hin gerichtet, verhindert ist.

Das Verriegelungselement 45a weist seitlich vorstehende, einteilig angeformte Druckplatten 62 auf. Die Druckplatten 62 dienen zum unmittelbaren Anliegen an dem jeweiligen Kraftspeicherelement 60. Jedes Kraftspeicherelement 60 ist entlang der Stellrichtung 44, also zwischen einer Druckplatte 62 des Verriegelungselements 45a und der Anlageschulter 61 des Gehäuses 2a, angeordnet.

Jeweils an den Druckplatten 62 und den gegenüberliegend angeordneten Anlageschultern 61 ist ein Aufnahmeelement 63 angeordnet. Das Aufnahmeelement 63 dient zur Aufnahme, Führung und Halterung des Kraftspeicherelements 60. Die Aufnahmeelemente 63 sind im Wesentlichen identisch ausgeführt. Die Aufnahmeelemente 63 sind im Wesentlichen zylindrisch oder leicht konisch ausgeführt. Die Aufnahmeelemente 63 sind so ausgeführt, dass sie innerhalb des von dem Kraftspeicherelement 60 gebildeten Hohlzylinders angeordnet sein können. Der Außendurchmesser des jeweiligen Aufnahmeelements 63 ist kleiner und insbesondere geringfügig kleiner als der Innendurchmesser des Kraftspeicherelements 60. Der Außendurchmesser des Aufnahmeelements 63 kann auch im Wesentlichen dem Innendurchmesser des Kraftspeicherelements 60 entsprechen.

Das Aufnahmeelement 63 erstreckt sich in Axialrichtung der Längsachse 3.

Nachfolgend wird anhand von Fig. 14 bis 18 die Funktion des Reibungsdämpfers 1a näher erläutert.

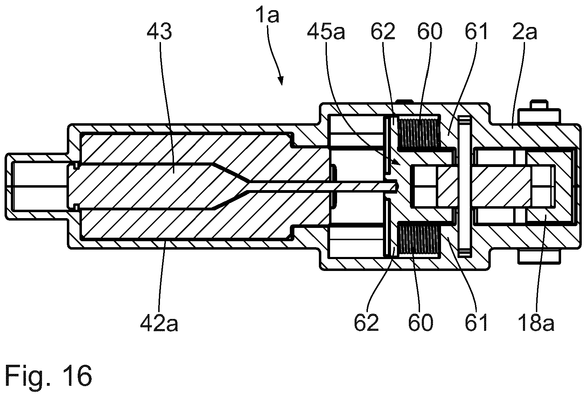

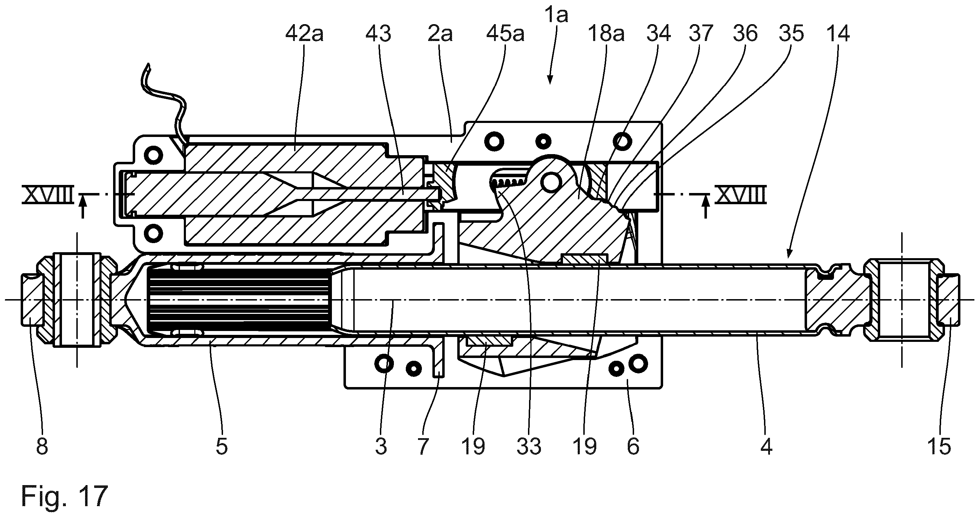

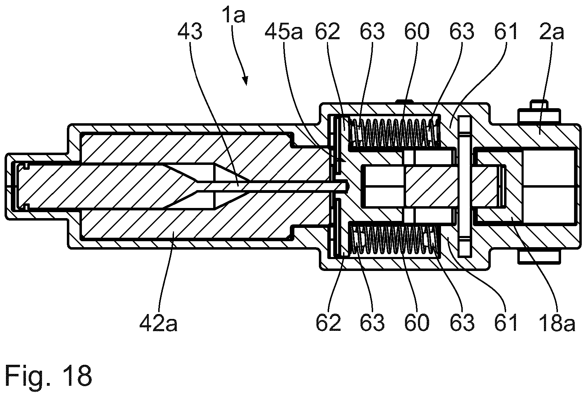

Um den Reibungsdämpfer 1a in die in Fig. 15 und 16 gezeigte Anordnung zu überführen, wird der Aktuator 42a geschaltet, also bestromt. Zum Auslösen dieses Schaltvorgangs wird der Aktuator 42, der als Hubmagnet ausgeführt ist, übersteuert, insbesondere mit der vierfachen Nennspannung angesteuert. Dadurch wird das Stellelement 43 gemäß Fig. 15 und 16 von links nach rechts in die in Fig. 17 und 18 gezeigte Position verlagert. Mit dem Stellelement 43 wird instantan das daran befestigte Verriegelungselement 45a verlagert. Das Verriegelungselement 45a liegt an der ersten Verriegelungsfläche 33 des Reibbelagsträgers 18a an und verriegelt den Reibbelagsträger 18a in einer Minimalposition. In der Minimalposition des Reibbelagsträgers 18a sind die Reibbeläge 19 mit minimalen Kontakt an dem Stößel 4 des Reibungsdämpfers 1a angeordnet. Die Minimalposition ist in Fig. 15 und 16 dargestellt.

Nach dem erfolgten Schaltprozess kann die Spannung auf die Nennspannung reduziert werden. Die von dem Hubmagnet 42a bereitstellte Kraft reicht aus, um das Verriegelungselement 45a in der Minimalposition zu halten. Diese Haltekraft ist erforderlich, da durch das Verlagern des Verriegelungselements 45a in die Minimalposition die Kraftspeicherelemente 60 komprimiert worden sind und somit eine mechanische Kraft den Kraftspeicherelementen eingeprägt ist. Diese Gegenkraft wirkt der Haltekraft des Aktuators 42a entgegen.

Um den Aktuator 42a zurück in die Maximalposition gemäß Fig. 17 und 18 zu verlagern, wird die Bestromung des Aktuators 42a abgeschaltet. Infolge der eingeprägten Gegenkraft der Kraftspeicherelemente 60 wird das Verriegelungselement 45a in Richtung des Aktuators 42a, also gemäß Fig. 15 und 16 von rechts nach links, verlagert. Ursächlich dafür ist die Druckkraft der Kraftspeicherelemente 60 auf die Druckplatten 62.

Dadurch, dass diese Zurückverlagerung von der Maximalposition gemäß Fig. 17 und 18 in die Minimalposition gemäß Fig. 15 und 16 dann erfolgt, wenn keine Bestromung des Aktuators 42a vorliegt, bilden die Kraftspeicherelemente 60 die Ausfallsicherungs-Einheit für den Reibungsdämpfer 1a. Es ist sichergestellt, dass bei einem unbeabsichtigten Stromausfall der Reibungsdämpfer 1a zuverlässig in einen Zustand überführt wird, in dem maximale Reibungsdämpfung gewährleistet ist.

Der Aktuator 42a gemäß dem gezeigten Ausführungsbeispiel weist keine Selbsthaltung auf. Das bedeutet, dass der Aktuator 42a das Stellelement 43 mit dem Verriegelungselement 45a im Wesentlichen reibungsfrei entlang der Stellrichtung 44 verlagern kann.

Es ist alternativ denkbar, den Aktuator 42a als Hubmagnet mit teilweiser Selbsthaltung auszuführen. Ein Vorteil besteht darin, dass die notwendige Spannung, um den Aktuator 42a in der in Fig. 15 gezeigten Minimalposition zu halten, gegenüber dem Aktuator 42a ohne Selbsthaltung reduziert ist. Dadurch ist der Energieverbrauch reduziert. Insbesondere sind die Kraftspeicherelemente 60 derart dimensioniert, dass die eingeprägte Gegenkraft der Kraftspeicherelemente 60 größer ist als die Selbsthaltung des Magneten. Bei einem Stromausfall oder einer abgeschalteten Bestromung des Aktuators 42a wird das Verriegelungselement 45a zuverlässig in die Maximalposition zurückverlagert.

Es ist alternativ auch möglich, den Aktuator 42a mit vollständiger Selbsthaltung auszuführen. In diesem Fall ist die Haltekraft des Aktuators 42a in der Minimalposition gemäß Fig. 15 derart stark, dass nach dem Schaltvorgang mit Übersteuerung die Spannungsversorgung abgeschaltet werden kann. Dadurch ist die Energieeinsparung zusätzlich reduziert. Um den Aktuator 42a in die Maximalposition zurückzuverlagern, ist eine Bestromung des Aktuators 42a in Gegenrichtung erforderlich. Da die Selbsthaltung rasch nachlässt, genügt eine kurzzeitige Bestromung in Form eines kurzen Stromimpulses, um die Selbsthaltung zu lösen, wobei die Kraftspeicherelemente 60 das Verriegelungselement 45a dann vollständig zurück in die Maximalposition verlagern. Um die Zurückverlagerung des Verriegelungselements 45a in die Maximalposition auch bei Stromausfall zu gewährleisten, also eine sogenannte "Fail-Safe-Funktion" zu ermöglichen, ist die Schalteinheit 41 mit einem elektrischen Speicherelement, das nicht dargestellt ist, in Signalverbindung. Das elektrische Speicherelement ist mit dem Aktuator 42a in Wirkverbindung. Das elektrische Speicherelement ist insbesondere durch einen oder mehrere Kondensatoren gebildet, die die elektrische Versorgung für einen kurzen Stromimpuls zum Lösen der Selbsthaltung im Falle eines Stromausfalls zur Verfügung stellen.

## Patentansprüche

1. Reibungsdämpfer umfassend
a. ein eine Längsachse (3) aufweisendes Gehäuse (2),
b. einen entlang der Längsachse (3) verlagerbaren Stößel (4),
c. eine Reibungs-Einheit (17) zum Erzeugen einer richtungsabhängigen Reibungskraft auf den Stößel (4), wobei die Reibungs-Einheit (17) mindestens einen an dem Stößel (4) reibend anliegenden Reibbelag (19) umfasst,
d. eine Schalt-Einheit (41) zum veränderlichen Festlegen der Reibungskraft,
wobei die Reibungs-Einheit (17) einen Reibbelagsträger (18) umfasst, an dem der mindestens eine Reibbelag (19) gehalten ist,
**dadurch gekennzeichnet, dass**
- der Reibbelagsträger (18) relativ zum Stößel (4) zwischen einer Auszugsposition und einer Einschubposition verlagerbar angeordnet ist,
- der Reibbelagsträger (18) um eine Kippachse (29) kippbar im Gehäuse (2) angeordnet ist, wobei die Kippachse (29) quer zur Längsachse (3) angeordnet ist.

2. Reibungsdämpfer gemäß einem der vorstehenden Ansprüche, **dadurch gekennzeichnet, dass** der Reibbelagsträger (18) mindestens eine Reibbelagsaufnahme (20) aufweist, in der der mindestens eine Reibbelag (19) angeordnet ist.

3. Reibungsdämpfer gemäß einem der vorstehenden Ansprüche, **gekennzeichnet durch** zwei Reibbeläge (19), die insbesondere jeweils eine Halbschalenkontur aufweisen.

4. Reibungsdämpfer gemäß einem der vorstehenden Ansprüche, **dadurch gekennzeichnet, dass** der Reibbelagsträger (18) eine Durchgangsöffnung (21) aufweist, durch die der Stößel (4) geführt ist.

5. Reibungsdämpfer gemäß Anspruch 4, **dadurch gekennzeichnet, dass** die Durchgangsöffnung (21) eine senkrecht zur Längsachse (3) zumindest abschnittsweise unsymmetrische Kontur aufweist.

6. Reibungsdämpfer gemäß Anspruch 4 oder 5, **dadurch gekennzeichnet, dass** die Durchgangsöffnung (21) einen ersten Durchgangsöffnungsabschnitt (22) und einen zweiten Durchgangsöffnungsabschnitt (24) aufweist, wobei insbesondere der erste Durchgangsöffnungsabschnitt (22) und der zweite Durchgangsöffnungsabschnitt (24) jeweils eine Abschnitts-Längsachse (23, 25) aufweisen, die mit einem Neigungswinkel (n) geneigt zueinander angeordnet sind.

7. Reibungsdämpfer gemäß einem der Ansprüche 4 bis 6, **dadurch gekennzeichnet, dass** die Reibbelagsaufnahme (20) als Vertiefung in der Durchgangsöffnung (21) ausgebildet ist.

8. Reibungsdämpfer gemäß einem der vorstehenden Ansprüche, **dadurch gekennzeichnet, dass** der Reibungsdämpfer (1) ein erstes, insbesondere an dem Gehäuse (2) angeordnetes, Befestigungselement (8) und ein zweites, insbesondere an dem Stößel (4) angeordnetes, Befestigungselement (15) zur Befestigung an zueinander beweglichen Teilen aufweist.

9. Reibungsdämpfer gemäß einem der vorstehenden Ansprüche, **dadurch gekennzeichnet, dass** die Schalt-Einheit (41) einen schaltbaren Aktuator (42) und ein mit dem Aktuator (42) mechanisch gekoppeltes Verriegelungselement (45) aufweist.

10. Reibungsdämpfer gemäß Anspruch 9, **dadurch gekennzeichnet, dass** das Verriegelungselement (45) mindestens eine Anlagefläche (54, 55) aufweist, mit der das Verriegelungselement (45) in einer verriegelten Anordnung an mindestens einer Verriegelungsfläche (33, 34, 35, 36, 37) des Reibbelagsträgers (18) anliegt.

11. Reibungsdämpfer gemäß Anspruch 9 oder 10, **dadurch gekennzeichnet, dass** das Verriegelungselement (45) als linear, insbesondere senkrecht zur Kippachse (29), verlagerbares Schiebeelement ausgeführt ist.

12. Reibungsdämpfer gemäß einem der Ansprüche 9 bis 11, **dadurch gekennzeichnet, dass** das Verriegelungselement (45) eine Ausnehmung (49) für ein kollisionsfreies Verlagern des Verriegelungselements (45) entlang der Längsachse (3) aufweist.

13. Reibungsdämpfer gemäß einem der Ansprüche 9 bis 12, **gekennzeichnet durch** eine Ausfallsicherungs-Einheit für eine Failsafe-Funktion des Reibungsdämpfers zum Anordnen des Verriegelungselements (45. 45a) in einer verriegelten Anordnung an dem Reibbelagsträger (18, 18a) derart, dass eine maximale richtungsunabhängige Reibungskraft wirkt.

## Claims

1. Friction damper comprising
a. a housing (2) having a longitudinal axis (3),
b. a plunger (4) that can be displaced along the longitudinal axis (3),
c. a friction unit (17) for producing a direction-dependent frictional force on the plunger (4), wherein the friction unit (17) comprises at least one friction lining (19) that is in frictional contact with the plunger (4),
d. a switching unit (41) for variable setting of the frictional force,
wherein the friction unit (17) comprises a friction lining support (18), on which the at least one friction lining (19) is held,
**characterised in that**
- the friction lining support (18) is arranged so as to be displaceable relative to the plunger (4) between a pull-out position and an insertion position,
- the friction lining support (18) is arranged in the housing (2) so as to be pivotable about a pivot axis (29), wherein the pivot axis (19) is arranged transverse to the longitudinal axis (3).

2. Friction damper according to one of the preceding claims, **characterised in that** the friction lining support (18) has at least one friction lining receptacle (20), in which the at least one friction lining (19) is arranged.

3. Friction damper according to one of the preceding claims, **characterised by** two friction linings (19), which in particular respectively have a half-shell contour.

4. Friction damper according to one of the preceding claims, **characterised in that** the friction lining support (18) has a passage opening (21) through which the plunger (4) is guided.

5. Friction damper according to claim 4, **characterised in that** the passage opening (21) has a contour that is at least partially asymmetrical perpendicular to the longitudinal axis (3).

6. Friction damper according to claim 4 or 5, **characterised in that** the passage opening (21) has a first passage opening section (22) and a second passage opening section (24), wherein in particular the first passage opening section (22) and the second passage opening section (24) respectively have a section longitudinal axis (23, 25), which are arranged inclined to each other at an angle of inclination (n).

7. Friction damper according to one of claims 4 to 6, **characterised in that** the friction lining receptacle (20) is designed as a recess in the passage opening (21).

8. Friction damper according to one of the preceding claims, **characterised in that** the friction damper (1) has a first fastening element (8) arranged in particular on the housing (2) and a second fastening element (15) arranged in particular on the plunger (4) for fastening to moving parts.

9. Friction damper according to one of the preceding claims, **characterised in that** the switching unit (41) has a switchable actuator (42) and a locking element (45) mechanically coupled to the actuator (42).

10. Friction damper according to claim 9, **characterised in that** the locking element (45) has at least one contact surface (54, 55) with which the locking element (45) rests against at least one locking surface (33, 34, 35, 36, 37) of the friction lining support (18) in a locked arrangement.

11. Friction damper according to claim 9 or 10, **characterised in that** the locking element (45) is designed as a sliding element that can be moved linearly, in particular perpendicular to the pivot axis (29).

12. Friction damper according to one of claims 9 to 11, **characterised in that** the locking element (45) has a cut-out (49) for collision-free displacement of the locking element (45) along the longitudinal axis (3).

13. Friction damper according to one of claims 9 to 12, **characterised by** a fail-safe unit for a fail-safe function of the friction damper for arranging the locking element (45, 45a) in a locked arrangement on the friction lining support (18, 18a) in such a way that a maximum direction-dependent frictional force is applied.

## Revendications

1. Amortisseur à friction comprenant
a. un boîtier (2) présentant un axe longitudinal (3),
b. un poussoir (4) déplaçable le long de l'axe longitudinal (3),
c. une unité de friction (17) destinée à générer une force de friction directionnelle sur le poussoir (4), l'unité de friction (17) comprenant au moins une garniture de friction (19) en contact de friction avec le poussoir (4),
d. une unité de commutation (41) pour la définition variable de la force de friction,
dans lequel l'unité de friction (17) comprend un support de garniture de friction (18) sur lequel est maintenue l'au moins une garniture de friction (19), **caracterisé en ce que**
- le support de garniture de friction (18) est agencé déplaçable par rapport au poussoir (4) entre une position d'extraction et une position d'insertion,
- le support de garniture de friction (18) est agencé dans le boîtier (2) de manière basculable autour d'un axe de basculement (29), l'axe de basculement (29) étant agencé transversalement à l'axe longitudinal (3).

2. Amortisseur à friction selon l'une des revendications précédentes, **caracterisé en ce que** le support de garniture de friction (18) présente au moins un logement de garniture de friction (20) dans lequel est agencée l'au moins une garniture de friction (19).

3. Amortisseur à friction selon l'une des revendications précédentes, **caracterisé par** deux garnitures de friction (19), qui présentent chacune en particulier un contour en demi-coque.

4. Amortisseur à friction selon l'une des revendications précédentes, **caracterisé en ce que** le support de garniture de friction (18) présente une ouverture de passage (21) à travers laquelle le poussoir (4) est guidé.

5. Amortisseur à friction selon la revendication 4, **caracterisé en ce que** l'ouverture de passage (21) présente, perpendiculairement à l'axe longitudinal (3), un contour asymétrique au moins sur certaines sections.

6. Amortisseur à friction selon la revendication 4 ou 5, **caracterisé en ce que** l'ouverture de passage (21) présente une première partie d'ouverture de passage (22) et une seconde partie d'ouverture de passage (24), la première partie d'ouverture de passage (22) et la seconde partie d'ouverture de passage (24) présentant en particulier chacune un axe longitudinal de partie (23, 25), qui sont agencés de manière inclinée l'un par rapport à l'autre avec un angle d'inclinaison (n).

7. Amortisseur à friction selon l'une des revendications 4 à 6, **caracterisé en ce que** le logement de garniture de friction (20) est réalisé sous la forme d'un renfoncement dans l'ouverture de passage (21).

8. Amortisseur à friction selon l'une des revendications précédentes, **caracterisé en ce que** l'amortisseur à friction (1) présente un premier élément de fixation (8), en particulier agencé sur le boîtier (2), et un second élément de fixation (15), en particulier agencé sur le poussoir (4), pour la fixation sur des pièces mobiles l'une par rapport à l'autre.

9. Amortisseur à friction selon l'une des revendications précédentes, **caracterisé en ce que** l'unité de commutation (41) présente un actionneur (42) commutable et un élément de verrouillage (45) couplé mécaniquement à l'actionneur (42).

10. Amortisseur à friction selon la revendication 9, **caracterisé en ce que** l'élément de verrouillage (45) présente au moins une surface d'appui (54, 55) avec laquelle l'élément de verrouillage (45) s'applique, dans un agencement verrouillé, sur au moins une surface de verrouillage (33, 34, 35, 36, 37) du support de garniture de friction (18).

11. Amortisseur à friction selon la revendication 9 ou 10, **caracterisé en ce que** l'élément de verrouillage (45) est conçu sous la forme d'un élément coulissant déplaçable de manière linéaire, en particulier perpendiculairement à l'axe de basculement (29).

12. Amortisseur à friction selon l'une des revendications 9 à 11, **caracterisé en ce que** l'élément de verrouillage (45) présente un évidement (49) pour un déplacement sans collision de l'élément de verrouillage (45) le long de l'axe longitudinal (3).

13. Amortisseur à friction selon l'une des revendications 9 à 12, **caracterisé par** une unité de sécurité en cas de défaut pour une fonction de sécurité intégrée de l'amortisseur à friction en vue de l'agencement de l'élément de verrouillage (45, 45a) dans un agencement verrouillé sur le support de garniture de friction (18, 18a) de telle manière qu'une force de friction non directionnelle maximale agit.
